# EUROPÄISCHE PATENTSCHRIFT

(11) **EP 2 524 751 B1**
(45) Veröffentlichungstag und Bekanntmachung des Hinweises auf die Patenterteilung: **20.07.2016**
(21) Anmeldenummer: 12002499.7
(22) Anmeldetag: 07.04.2012
(51) Int. Cl.: B23B 3/06, B23Q 39/02, B23Q 7/04

(54) **Vertikaldrehmaschine**
Vertical lathe
Tour verticale

(30) Priorität: 19.05.2011 DE 102011101974
(43) Veröffentlichungstag der Anmeldung: 21.11.2012
(73) Patentinhaber: Gildemeister Drehmaschinen GmbH, 33689 Bielefeld (DE)
(72) Erfinder: Walz, Jürgen, 72636 Frickenhausen (DE); Lube, Siegfried, 73235 Weilheim (DE)
(74) Vertreter: Schober, Mirko

(56) Entgegenhaltungen:
- EP-A1- 1 574 273
- WO-A1-97/10071
- WO-A1-2004/012888
- DE-A1-102010 034 739
- DE-U1-202009 017 339

## Beschreibung

Die Erfindung betrifft eine Vertikaldrehmaschine nach dem Oberbegriff des Anspruchs 1.

Derartige Vertikaldrehmaschinen verfügen über eine vertikale Werkstückspindel sowie über eine auf einem um eine horizontale Achse schwenkbaren Spindelträger angeordnete Werkzeugspindel, an der rotierende Werkzeuge, wie beispielsweise Bohrer oder Fräser, aufgenommen werden können.

Eine Maschine der gattungsgemäßen Art ist beispielsweise in der DE 10 2005 039 818 A1 offenbart. Bei dieser Maschine ist der schwenkbare Spindelträger an einem Schlitten angeordnet, welcher den Schwenkantrieb beinhaltet. Das Nachteilige an dieser Konstruktion ist jedoch, dass die Steifigkeit des Spindelträgers durch die einseitige Lagerung begrenzt ist bzw. hohe Materialstärken des Spindelträgers und Schwenkantriebs fordert, um eine hinreichend genaue Fertigung zu ermöglichen.

Um dieses Problem zu lösen, offenbart die DE 102 35 873 A1 eine Maschine der in Rede stehenden Art, an der der Spindelträger mit zwei sich bezogen auf die Werkzeugspindeln gegenüberliegenden Schwenklagern schwenkbar gelagert ist. Hierdurch wird eine bei vergleichbarem Materialeinsatz signifikant steifere Konstruktion ermöglich. Die Maschine hat jedoch den Nachteil, dass das zweite Lager eine Maschinenwand oder ein Maschinengestell auf der dem Schwenkantrieb gegenüberliegenden Seite der Werkzeugspindeln erfordert, wodurch die Zugänglichkeit der Werkzeugspindeln, beispielsweise für einen Werkzeugaustausch, von dieser Seite aus erheblich erschwert ist. Da bei den Maschinen gemäß dem Stand der Technik jedoch die Werkstückspindel in einer zur Richtung der Schwenkachse des Spindelträgers senkrechten Richtung verfahren wird, um Werkstückzufuhr bzw. Ablagevorrichtungen anzufahren, ist dies die als Bedienerseite einzig geeignete Seite, wenn aus Aufstellungsplatz technischen Gründen gefordert ist, die Maschine von einer Seite aus bedienen zu können. Dabei muss, um Maschinen zu bauen, die eine weitgehend automatisierte Bearbeitung ermöglichen, bei Maschinen nach dem Stand der Technik der Nachteil der im Hinblick auf die Steifigkeit unvorteilhaften Spindelträgerlagerung oder der Nachteil der erschwerten Zugänglichkeit der Werkzeugspindeln in Kauf genommen werden.

Die WO 2004/012888 A1 offenbart ebenfalls eine Maschine der gattungsgemäßen Art. Der Spindelträger dieser Maschine weist eine Joch- bzw. Schwingenform auf und ist ebenfalls mit zwei sich bezogen auf die Werkzeugspindel gegenüberliegenden Schwenklagern schwenkbar gelagert. Auch bei dieser Maschine ist die Verfahrrichtung der Werkstückspindel senkrecht zur Schwenkachse des Spindelträgers angeordnet. Dementsprechend ist auch bei dieser Maschine die Zugänglichkeit der Werkzeugspindeln durch die Lagerung des Spindelträgers erschwert bzw. verhindert.

Der Erfindung liegt daher die Aufgabe zugrunde, eine Drehmaschine aufzuzeigen, die eine steife und platzsparende Konstruktion aufweist und gleichzeitig eine gute Zugänglichkeit des Arbeitsraums, insb. der Werkzeugspindeln ermöglicht.

Die Aufgabe wird gelöst durch eine Vertikaldrehmaschine mit den Merkmalen des Anspruchs 1.

Die Merkmale der Unteransprüche betreffen vorteilhafte Ausführungsformen.

Die erfindungsgemäße Vertikaldrehmaschien weist eine vertikal angeordnete Werkstückspindel auf, an deren Unterseite sich eine Werkstückaufnahme befindet. Mindestens eine Werkzeugspindel ist auf einem um eine horizontale Schwenkachse schwenkbaren Spindelträger angeordnet. Dabei ist die Werkstückspindel entlang einer ersten Richtung verfahrbar, wobei erfindungsgemäß die erste Richtung zumindest im Wesentlichen parallel zur Richtung der Schwenkachse des Spindelträgers ist. Durch die Verfahrbarkeit der Werkstückspindel in dieser Richtung wird der platzsparende Aufbau einer Vertikaldrehmaschine ermöglicht und gleichzeitig die Möglichkeit eröffnet, einen großflächigen Zugang zum Arbeitsraum und insbesondere zum Spindelträger mit den Werkzeugspindeln zu schaffen, der nicht durch Lagerungen, Antriebe, Werkstückzuführeinrichtungen oder Ähnliches eingeschränkt bzw. behindert wird.

Vorzugsweise ist eine Mehrzahl Werkzeugspindeln auf dem Spindelträger angeordnet. Dies erlaubt es, mehrere rotierende Werkzeuge gleichzeitig in der Vertikaldrehmaschine zu montieren, wodurch mehrere Arbeitsgänge direkt hintereinander auf einer Maschine durchgeführt werden können. Insbesondere ist es dabei vorteilhaft, wenn die Mehrzahl Werkzeugspindeln entlang einer zumindest im Wesentlichen zur Schwenkachse des Spindelträgers parallelen Richtung nebeneinander auf dem Spindelträger angeordnet sind. Dies hat den Vorteil, dass die verschiedenen Werkzeugspindeln durch Bewegungen der Werkstückspindel entlang ihrer ersten Bewegungsrichtung angefahren werden können.

Vorteilhafterweise ist die Werkstückaufnahme in Richtung der Achse der Werkstückspindel verfahrbar. Dies hat den Vorteil, dass durch die Verfahrbarkeit der Spindel entlang dieser Richtung sowohl der Vorschub bei der Drehbearbeitung als auch die Werkstückmanipulation, beispielsweise das Aufnehmen oder Ablegen von Werkstücken, ermöglicht werden. Dies ist insbesondere dann von Vorteil, wenn die Werkstückaufnahme automatisierte Spannmittel aufweist, die ein Anfahren eines Werkstücks und anschließendes Spannen des Futters ermöglichen, um die Werkstücke aufzugreifen.

Vorteilhafterweise ist an dem Spindelträger auch eine Werkzeugaufnahme für feststehende Werkzeuge angeordnet. Dadurch werden im Arbeitsraum des Spindelträgers neben der Bearbeitung mit rotierenden Werkzeugen auch Bearbeitungsschritte mit feststehenden Werkzeugen, beispielsweise Drehstählen ermöglicht.

Vorzugsweise weist die Vertikaldrehmaschine auch eine Werkstückzuführ- und/oder -ablagevorrichtung im Verfahrbereich der Werkstückspindel entlang ihrer ersten Verfahrrichtung auf. Eine derartige Vorrichtung dient der Automatisierung der Bearbeitung und somit der Wirtschaftlichkeit der Maschine. Deren Anordnung im Verfahrbereich entlang der ersten Verfahrrichtung ermöglicht es, die Verfahrbarkeit der Werkstückspindel entlang der ersten Richtung nicht nur für die Werkstückbearbeitung, sondern auch gleichzeitig für die Werkstückzufuhr und -ablage zu nutzen.

Vorteilhafterweise ist die Werkstückspindel in einer weiteren, von der Richtung der Schwenkachse des Spindelträgers und der Richtung der Achse der Werkstückspindel verschiedenen, insb. zu einer oder beider dieser Richtungen senkrechten, Richtung verfahrbar. Eine solche Verfahrbarkeit der Werkstückspindel kann sowohl zur Zustellung bei der Bearbeitung als auch zur Manipulation der Werkstücke bei deren Zuführung und Ablage eingesetzt werden. Daher können vorteilhafterweise durch das Vorsehen der Verfahrbarkeit der Spindel in dieser Richtung verschiedene, ansonsten notwendige Positioniereinrichtungen, beispielsweise des Spindelträgers oder der Werkstückzuführ- und/oder -ablagevorrichtung entfallen.

Der Spindelträger ist erfindungsgemäß mit zwei, sich auf die Werkstückspindeln bezogen gegenüberliegenden, Schwenklagern gelagert. Diese Lagerung ermöglicht eine im Hinblick auf die Steifigkeit vorteilhafte Gestaltung des Spindelträgers. Dieser kann dann vorteilhafterweise als Schwinge bzw. jochförmig gestaltet werden, so dass die Schneidenbereiche der rotierenden Werkzeuge sich im Bereich der Schwenkachse des Werkzeugträgers befinden.

Vorteilhafterweise weist die Vertikaldrehmaschine eine Bedienungsseite auf, die zumindest im Wesentlichen parallel zur ersten Richtung ist. Unter Bedienungsseite ist dabei insbesondere die Seite der Maschine zu verstehen, von der aus Eingriff in den Arbeitsraum der Maschine, insbesondere Manipulationen der Werkzeuge am Einfachsten möglich sind. Vorteilhafterweise sind Einrichtungen zur Steuerung der Maschine an der Bedienungsseite vorgesehen, so dass leichte Zugänglichkeit des Arbeitsraums sowie die Steuerung der Maschine durch den Bediener von der gleichen Position aus durchgeführt werden können, was die Handhabung der Maschine erleichtert.

Vorzugsweise sind die Werkzeugspindeln als integrierte Motorspindeln ausgebildet, was den Vorteil hat, dass keine Antriebsstränge zu den auf dem schwenkbaren Werkzeugträger angeordneten Werkspindeln geführt werden müssen. Dies vereinfacht die Konstruktion des schwenkbaren Werkzeugträgers erheblich. Besonders vorteilhaft ist, wenn dabei die Werkzeugspindeln die Motorwellen bilden. Diese Ausführung als Direktantrieb der Werkzeugspindeln ist besonders Gewichts-, Platz- und Kosten sparend.

Vorzugsweise weist die Vertikaldrehmaschine einen Schwenkantrieb zum Schwenken des Spindelträgers um seine horizontale Schwenkachse auf. Ein derartiger Antrieb ermöglicht zunächst die Automatisierung des Schwenkvorgangs bei der Bearbeitung. Vorteilhafterweise ist der Schwenkantrieb auf der der Werkstückzuführ- und/oder ablagevorrichtung gegenüberliegenden Seite des Spindelträgers angeordnet bzw. gegenüber einer Verfahrposition der Werkstückspindel, die zum Bestücken der Werkstückspindel bzw. zur Entnahme der Werkstücke vorgesehen ist. Eine derartige Anordnung ist besonders kompakt und ermöglicht zudem kurze Verfahrwege der Werkstückspindel entlang ihrer ersten Verfahrrichtung.

Vorteilhafterweise weist die Vertikaldrehmaschine ein Gehäuse auf, welches über eine Öffnung verfügt, durch die der Arbeitsraum der Vertikaldrehmaschine aus einer von der Richtung der Schwenkachse des Spindelträgers verschiedenen Richtung zugänglich ist. Die Kapselung derartiger Maschinen im Gehäuse ist zum einen aus Gründen der Arbeitssicherheit, zum anderen zum Schutz der Maschine vor Verschmutzung vorteilhaft. Durch die Positionierung der Öffnung so, dass durch sie der Arbeitsraum aus einer von der Richtung der Schwenkachse des Spindelträgers verschiedenen Richtung möglich ist, wird ein direkter Zugang zu den Werkzeugspindeln mit kurzen Greifwegen und ohne Behinderung durch Einbauten ermöglicht. Die Öffnung ist dabei vorzugsweise verschließbar gestaltet, beispielsweise als Schiebetür und/oder zur Öffnung des Sichtfensters. Vorzugsweise ist die Richtung, aus der der Arbeitsraum durch die Öffnung zugänglich ist, senkrecht zur Schwenkachse des Spindelträgers angeordnet. Dies ermöglicht den kürzesten Weg zwischen der Öffnung und den Werkzeugspindeln.

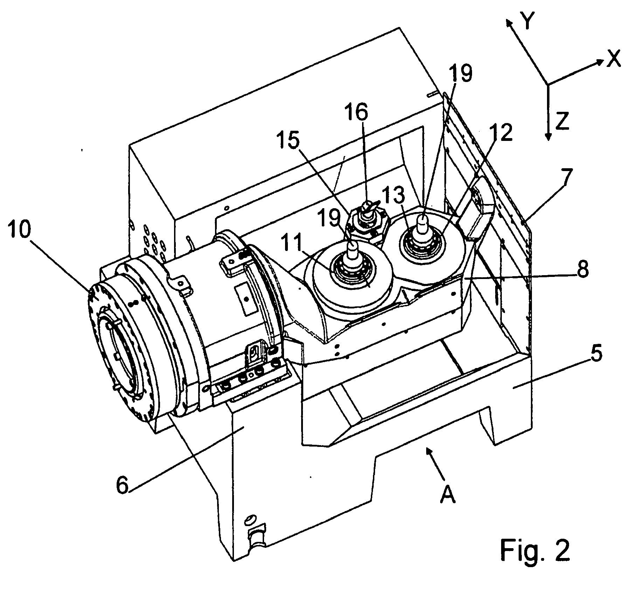

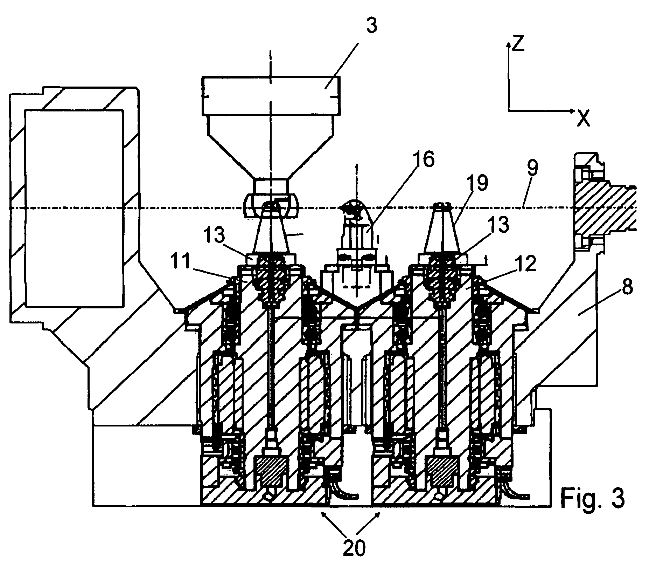

Die Erfindung wird im Folgenden anhand der Figuren 1 bis 3 schematisch näher erläutert. Es zeigen:
- Figur 1 -: eine Seitenansicht einer beispielhaften erfindungsgemäßen Vertikaldrehmaschine,
- Figur 2 -: eine perspektivische Ansicht einer beispielhaften erfindungsgemäßen Vertikaldrehmaschine, wobei zur besseren Darstellung einzelner Details einige wesentliche Elemente der Vertikaldrehmaschine weggelassen wurden,
- Figur 3 -: eine schematische Darstellung eines beispielhaften Spindelträgers einer erfindungsgemäßen Vertikaldrehmaschine.

Die beispielhafte erfindungsgemäße Vertikaldrehmaschine weist ein Maschinenbett 5 auf. Auf diesem ist die Konsole 1 mittels der Führungsbahn 17 entlang einer ersten Bewegungsrichtung X verfahrbar. An der Konsole 1 ist das Spindelgehäuse 2 angebracht, das durch den Vorschubmotor 18 relativ zur Konsole 1 in Richtung Z, d.h. parallel zur Richtung der Achse der Werkstückspindel 3, die in dem Spindelgehäuse 2 gelagert ist, verfahren werden kann.

An dem Maschinenbett 5 sind die Seitenwände 6 und 7 vorgesehen, die den Arbeitsraum, in dem der Spindelträger 8 gelagert ist, begrenzen und der Lagerung des Spindelträgers 8 und des Schwenkantriebs 10 dienen. Der Schwenkantrieb 10 dient dem Verschwenken des Spindelträgers 8 um die Schwenkachse 9.

An dem Spindelträger 8 sind beispielhaft zwei Werkzeugspindeln 11 und 12 vorgesehen. Diese sind in zur Richtung der Schwenkachse 9 des Spindelträgers 8 paralleler Richtung nebeneinander angeordnet und weisen jeweils eine Werkzeugaufnahme 13 zur Aufnahme rotierender Werkzeuge 19, wie beispielsweise Bohrer oder Fräser auf. Auf dem beispielhaften Spindelträger 8 ist weiterhin eine Werkzeugaufnahme 15 zur Aufnahme feststehender Werkzeuge 16, wie dem beispielhaft dargestellten Drehstahl, angeordnet.

Die Spindeln 11 und 12 sind als integrierte Motorspindeln ausgebildet, wobei es sich bei den beispielhaften integrierten Motorspindeln um Motorspindeln mit einem Direktantrieb handelt, bei denen die Spindelachsen gleichzeitig als Motorwellen der Spindelmotoren 20 dienen.

Eine Werkstückzuführ- und/oder -ablagestation 14 ist im Verfahrbereich der Werkstückaufnahme 4 entlang der Achse angeordnet, wobei sich die Werkstückzuführ- und/oder -ablagestation 14 bezogen auf den Spindelträger 8 auf der gegenüberliegenden Seite des Schwenkantriebs 10 befindet.

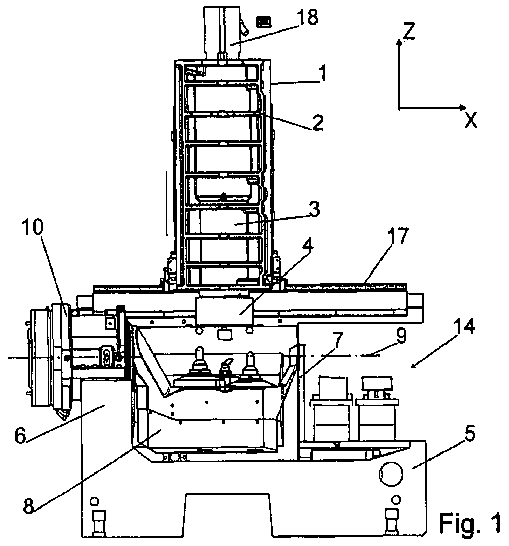

Durch diese Anordnung ist eine Manipulation des Arbeitsraums, insb. der Werkzeugspindeln, aus Richtung A besonders gut möglich. Daher weist die beispielhafte Maschine die in Figur 1 als Draufsicht dargestellte Seite als Bedienungsseite auf.

## Patentansprüche

1. Vertikaldrehmaschine, mit einer vertikal angeordneten Werkstückspindel (3), die an deren Unterseite eine Werkstückaufnahme (4) aufweist, und mindestens einer Werkzeugspindel (11, 12) mit jeweils einer Werkzeugaufnahme (13) zur Aufnahme rotierender Werkzeuge (19), die auf einem um eine horizontale Schwenkachse (9) schwenkbaren und entlang der Schwenkachse beidseitig gelagerten Spindelträger (8) angeordnet ist, wobei der Spindelträger (8) mit zwei, sich auf die Werkzeugspindel(n) (12, 13) bezogen, gegenüberliegenden Schwenklagern gelagert ist, wobei der Spindelträger (8) jochförmig und als Schwinge gestaltet ist, so dass die Schneidenbereiche der rotierenden Werkzeuge (19) sich im Bereich der Schwenkachse (9) des Spindelträgers (8) befinden, wobei die Werkstückspindel (3) entlang einer ersten Richtung (X) verfahrbar ist, **dadurch gekennzeichnet, dass** die erste Richtung (X) zumindest im Wesentlichen parallel zur Richtung der Schwenkachse (9) des Spindelträgers (8) ist und
neben dem Spindelträger (8) in Richtung seiner Schwenkachse (9) eine Werkstückzuführ- und -ablagevorrichtung angeordnet ist.

2. Vertikaldrehmaschine nach Anspruch 1,
**dadurch gekennzeichnet,**
**dass** eine Mehrzahl Werkzeugspindeln (11, 12), vorzugsweise entlang einer zur Schwenkachse (9) zumindest im Wesentlichen parallelen Richtung nebeneinander, auf dem Spindelträger (8) angeordnet sind.

3. Vertikaldrehmaschine nach Anspruch 1 oder 2,
**dadurch gekennzeichnet,**
**dass** die Werkstückaufnahme (4) in Richtung der Achse der Werkstückspindel (Z) verfahrbar ist.

4. Vertikaldrehmaschine nach einem der vorigen Ansprüche,
**dadurch gekennzeichnet,**
**dass** eine Werkzeugaufnahme (13) für feststehende Werkzeuge an dem Spindelträger (9) angeordnet ist.

5. Vertikaldrehmaschine nach einem der vorigen Ansprüche,
**dadurch gekennzeichnet,**
**dass** eine Werkstückzuführ- und/oder -ablagevorrichtung (14) im Verfahrbereich der Werkstückspindel (2) entlang der ersten Richtung (X) vorgesehen ist.

6. Vertikaldrehmaschine nach einem der vorigen Ansprüche,
**dadurch gekennzeichnet,**
**dass** die Werkstückspindel (3) in einer von der Richtung der Schwenkachse (9) des Spindelträgers (8) und der Richtung der Achse der Werkstückspindel (Z) verschiedenen, insbesondere zu einer oder beiden Richtungen senkrechten, Richtung verfahrbar ist.

7. Vertikaldrehmaschine nach einem der vorigen Ansprüche,
**dadurch gekennzeichnet,**
**dass** die Vertikaldrehmaschine eine Bedienungsseite aufweist, die zumindest im Wesentlichen parallel zur ersten Richtung (X) ist.

8. Vertikaldrehmaschine nach einem der vorigen Ansprüche,
**dadurch gekennzeichnet,**
**dass** die Werkzeugspindel(n) als integrierte Motorspindel(n) ausgebildet ist/sind, wobei insbesondere die Werkzeugspindel(n) die Motorwelle(n) bildet/-n.

9. Vertikaldrehmaschine nach einem der vorigen Ansprüche,
**dadurch gekennzeichnet,**
**dass** die Vertikaldrehmaschine einen Schwenkantrieb (20) zum Schwenken des Spindelträgers (8) um seine horizontale Schwenkachse (9) aufweist, der vorzugsweise auf der der Werkstückzuführ- und/oder -ablagevorrichtung (14) gegenüberliegenden Seite des Spindelträgers (8) angeordnet ist.

10. Vertikaldrehmaschine nach einem der vorigen Ansprüche,
**dadurch gekennzeichnet,**
**dass** die Vertikaldrehmaschine ein Gehäuse aufweist, welches über eine, vorzugsweise verschließbare, Öffnung verfügt, durch die der Arbeitsraum der Vertikaldrehmaschine aus einer von der Richtung der Schwenkachse (9) des Spindelträgers (8) verschiedenen, vorzugsweise zu dieser senkrechten, Richtung zugänglich ist.

## Claims

1. Vertical lathe, with a vertically mounted workpiece spindle (3) which has a workpiece holder (4) on the underneath, and at least one tool spindle (11, 12) each with a tool holder (13) to receive rotating tools (19) and which is arranged on a spindle support (8) which is able to pivot about a horizontal pivotal axis (9) and which is mounted on each side along the pivotal axis, wherein the spindle support (8) is supported with two pivotal bearings which are arranged opposite one another relative to the tool spindle(s) (12, 13), wherein the spindle support (8) is yoke-shaped and is configured as a rocker arm so that the cutting regions of the rotating tools (19) are located in the area of the pivotal axis (9) of the spindle support (8), wherein the tool spindle (3) is movable along a first direction (X),
**characterised in that**
the first direction (x) is at least substantially parallel to the direction of the pivotal axis (9) of the spindle support (8), and a workpiece supply and storage device is arranged next to the spindle support (8) in the direction of its pivotal axis (9).

2. Vertical lathe according to claim 1
**characterised in that**
a plurality of tool spindles (11, 12) are arranged on the spindle support side by side preferably along a direction at least substantially parallel to the pivotal axis (9).

3. Vertical lathe according to claim 1 or 2
**characterised in that**
the workpiece holder (4) is movable in the direction of the axis of the workpiece spindle (Z).

4. Vertical lathe according to one of the preceding claims
**characterised in that**
a tool holder (13) is arranged on the spindle support (9) for static tools.

5. Vertical lathe according to one of the preceding claims
**characterised in that**
a workpiece supply and/or storage device (14) is provided in the travel area of the workpiece spindle (2) along the first direction (X).

6. Vertical lathe according to one of the preceding claims,
**characterised in that**
the workpiece spindle (3) is movable in a direction which is different from the direction of the pivotal axis (9) of the spindle support (8) and from the direction of the axis of the workpiece spindle (Z), in particular in a direction at right angles to one or both directions.

7. Vertical lathe according to one of the preceding claims
**characterised in that**
the vertical lathe has an operating side which is at least substantially parallel to the first direction (X).

8. Vertical lathe according to one of the preceding claims
**characterised in that**
the tool spindle(s) is/are configured as integrated motor spindle(s) wherein in particular the tool spindle(s) forms/form the motor shaft(s).

9. Vertical lathe according to one the preceding claims
**characterised in that**
the vertical lathe has a pivotal drive (20) for pivoting the spindle support (8) about its horizontal pivotal axis (9), which is preferably arranged on the side of the spindle support (8) opposite the workpiece supply and/or storage device.

10. Vertical lathe according to one of the preceding claims
**characterised in that**
the vertical lathe has a housing which has a preferably closable opening through which the working chamber of the vertical lathe is accessible from a direction which is different from the direction of the pivotal axis (9) of the spindle support (8), preferably a direction at right angles thereto.

## Revendications

1. Tour vertical comprenant une broche porte-pièce (3), qui présente un réceptacle de pièce (4) à son extrémité inférieure, et au moins une broche porte-outil (11, 12), qui, dotée d'un réceptacle de pièce (13) pour la réception d'outils rotatifs (19), est disposée sur un porte-broche (8) qui, pivotant autour d'un axe de rotation horizontal (9), est monté des deux côtés, le long dudit axe de pivotement, le porte-broche (8) étant monté avec deux paliers pivotants, opposés par rapport à la broche / aux broches porte-outil (12, 13), sachant que le porte-broche (8) présente la forme d'un joug et est conçu en tant que bras oscillant de manière à ce que la zone de coupe des outils rotatifs (19) se trouve dans la zone de l'axe de pivotement (9) du porte-broche (8), sachant que la broche porte-pièce (3) peut être déplacée dans une première direction (X),
**caractérisé en ce que**
la première direction (X) est au moins sensiblement parallèle à la direction de l'axe de pivotement (9) du porte-broche (8) et qu'un dispositif d'amenée et de dépôt de pièces est disposé à côté du porte-broche (8), dans la direction de son axe de pivotement (9).

2. Tour vertical selon la revendication 1,
**caractérisé en ce que**
plusieurs broches porte-outil (11, 12) sont disposées, les unes à côté des autres, sur le porte-broche (8), de préférence dans une direction s'étendant au moins sensiblement parallèlement à l'axe de pivotement (9).

3. Tour vertical selon revendication 1 ou 2,
**caractérisé en ce que**
le réceptacle de pièce (4) peut être déplacé dans la direction (Z) de l'axe de la broche porte-pièce.

4. Tour vertical selon l'une des revendications précédentes,
**caractérisé en ce que**,
sur le porte-broche (9), est agencé un réceptacle (13) pour des outils fixes.

5. Tour vertical selon l'une des revendications précédentes,
**caractérisé en ce que**,
dans la zone de déplacement de la broche porte-pièce (2), un dispositif d'amenée et / ou de dépôt de pièces (14), est prévu le long de la première direction (X).

6. Tour vertical selon l'une des revendications précédentes,
**caractérisé en ce que**
la broche porte-pièce (3) peut être déplacée dans une direction différente de la direction de l'axe de pivotement (9) du porte-broche (8) et de la direction (Z) de ladite broche porte-pièce, en particulier dans une direction perpendiculaire à l'une ou aux deux directions.

7. Tour vertical selon l'une des revendications précédentes,
**caractérisé en ce que**
le tour vertical présente un côté opérateur, qui est au moins sensiblement parallèle à la première direction (X).

8. Tour vertical selon l'une des revendications précédentes,
**caractérisé en ce que**
la / les broche/s porte-outil est / sont réalisée/s en tant que broche/s motorisée/s, intégré/es, sachant que la / les broche/s porte-outil forme / forment, en particulier, l'arbre / les arbres moteur/s.

9. Tour vertical selon l'une des revendications précédentes,
**caractérisé en ce que**
le tour vertical présente un entraînement pivotant (20) pour le pivotement du porte-broche (8) autour de son axe de pivotement (9), lequel entraînement est disposé, de préférence, sur le côté du porte-broche (8) opposé au dispositif d'amenée et / ou de dépôt de pièces (14).

10. Tour vertical selon l'une des revendications précédentes,
**caractérisé en ce que**
le tour vertical présente un carter qui dispose d'une ouverture, pouvant, de préférence, être fermée, par laquelle l'espace de travail du tour vertical est accessible à partir d'une direction différente de la direction de l'axe de pivotement (9) du porte-broche (8), de préférence perpendiculaire à celle-ci.
